(19) **Europäisches Patentamt**
**European Patent Office**
**Office européen des brevets**

(11) **EP 2 002 595 B1**

(12) **FASCICULE DE BREVET EUROPEEN**

(45) Date de publication et mention
de la délivrance du brevet:
**26.12.2012 Bulletin 2012/52**

(51) Int Cl.:
***H04L 9/30*** (2006.01)

(21) Numéro de dépôt: **07726721.9**

(22) Date de dépôt: **08.03.2007**

(86) Numéro de dépôt international:
**PCT/EP2007/052196**

(87) Numéro de publication internationale:
**WO 2007/104705 (20.09.2007 Gazette 2007/38)**

(54) **PROCEDE ET SYSTEME DE CHIFFREMENT CHERCHABLE DECHIFFRABLE**

VERFAHREN UND SYSTEM ZUR DECHIFFRIERBAREN DURCHSUCHBAREN
VERSCHLÜSSELUNG

METHOD AND SYSTEM FOR DECIPHERABLE SEARCHABLE ENCRYPTION

(84) Etats contractants désignés:
**AT BE BG CH CY CZ DE DK EE ES FI FR GB GR
HU IE IS IT LI LT LU LV MC MT NL PL PT RO SE
SI SK TR**

(30) Priorité: **15.03.2006 FR 0650869**

(43) Date de publication de la demande:
**17.12.2008 Bulletin 2008/51**

(73) Titulaire: **Gemalto SA
92190 Meudon (FR)**

(72) Inventeurs:
• **FUHR, Thomas
F-75014 Paris (FR)**
• **PAILLIER, Pascal
75020 Paris (FR)**

(56) Documents cités:
• **DAN BONEH ET AL: "Public Key Encryption with
Keyword Search" EUROCRYPT 2004, 2004,
pages 506-522, XP019005037 cité dans la
demande**
• **PHILIPPE GOLLE ET AL: "Secure Conjunctive
Keyword Search over Encrypted Data" ACNS
2004, 2004, pages 31-45, XP019008011**
• **MICHEL ABDALLA ET AL: "Searchable
Encryption Revisited: Consistency Properties,
Relation to Anonymous IBE, and Extensions"
CRYPTO 2005, 2005, pages 205-222,
XP019016552**

**Description**

La présente invention se rapporte au domaine de la cryptographie.

Elle se rapporte plus particulièrement au domaine des procédés de chiffrement permettant la recherche de mots-clé chiffrés.

De tels procédés de chiffrement permettant la recherche de mots-clé chiffrés sont connus de l'art antérieur, notamment par la publication de Boneh, Di Crescenzo, Ostrovski et Persiano « Public key encryption with keyword search » EUROCRYPT 2004, Volume 3027 dans « Lecture notes in Computer science », pages 506-522.

Dans un tel procédé dit procédé PEKS pour « Public-key Encryption with Keyword Search » en langue anglaise, une entité A fournit à une passerelle, une trappe de recherche $Tm$ calculée à partir de sa clé privée, et associée au mot-clé $m$. Lorsqu'une entité B souhaite envoyer un message à l'entité A par un procédé de chiffrement symétrique, il chiffre un mot clé $m$' grâce à la clé publique de l'entité A, $pk,$ de sorte à obtenir un chiffré $C$, qui est envoyé à la passerelle. La passerelle applique alors un test $TEST (Tm, C)$ utilisant la trappe de recherche $Tm$ pour déterminer si le chiffré $C$ correspond à un chiffrement du mot clé $m$ par la clé publique $pk$ ou non. De la sorte, la passerelle peut déterminer si le chiffré $C$ correspond ou non à un chiffrement du mot clé $m$, mais sans avoir accès à ce mot clé, ni au mot clé $m$' chiffré dans $C$.

Ce type de chiffrement avec possibilité de recherche de mots clé dans les chiffrés est notamment utilisé dans le domaine de la transmission de données. Le test $TEST (Tm, C)$ est dans ce cas discriminant pour que la passerelle route un message vers tel ou tel poste de l'entité A, par exemple poste fixe, ordinateur portable, téléphone mobile, en fonction du mot clé associé à la trappe Tm.

Dans de tels procédés, on ne désire pas que la passerelle puisse déchiffrer le chiffré C reçu pour faire le routage des messages. Aucune possibilité de déchiffrage n'est donc prévue dans les procédés de chiffrement permettant une recherche par mots clé actuels.

Toutefois, il peut être avantageux de permettre un déchiffrage cherchable des chiffrés reçus. Par exemple, dans le cas d'un abonné d'un opérateur téléphonique qui reçoit régulièrement un relevé des communications passées chiffré par l'opérateur avec la clé publique de l'abonné, le relevé est une liste de numéros téléphoniques chiffrés l'un après l'autre avec la clé publique de l'abonné. L'abonné est donc le seul à pouvoir déchiffrer le relevé à l'aide de sa clé privée de déchiffrement, et le relevé chiffré peut donc être transmis à l'abonné sur un canal de communication non confidentiel tel qu'internet. Toutefois, dans ce cas de chiffrement déchiffrable classique, la clé de déchiffrement de l'abonné déchiffre nécessairement l'ensemble des informations chiffrées. Or, il est possible qu'un tiers, par exemple un juge ou une autorité de police désire avoir accès à ces informations chiffrées. Avec les procédés de chiffrement de l'art antérieur, il n'est pas possible pour une telle autorité d'avoir accès à un numéro particulier sans déchiffrer l'ensemble des numéros, ce qui peut nuire à l'exigence de confidentialité des communications.

La présente invention entend notamment pallier cet inconvénient de l'art antérieur.

Par ailleurs, dans un procédé de chiffrement asymétrique déchiffrable, il convient de générer une clé publique pour chiffrer le message, et une clé privée associée à la clé publique destinée au déchiffrement du message. Ainsi, à partir d'un chiffré $C$, chiffré à partir d'une clé publique $pk$ et d'un mot clé déterminé $m$, il est possible de retrouver $m$, à l'aide de la clé privée $sk$ associée à la clé publique $pk$. Toutefois, il convient de noter que ce déchiffrement ne permet pas une recherche comme dans les algorithmes de recherche tels que précédemment décrits dans l'art antérieur.

En effet, dans de tels algorithmes, l'entité réalisant la recherche ne connaît pas le mot clé $m$ en clair. Ainsi, même lorsque l'on fournit une clé de déchiffrement, il n'est donc pas possible de réaliser une recherche consistant à déchiffrer le chiffré $C$ en un mot $m$' et à comparer ce mot $m$' à des mots déterminés $m$, puisque l'entité réalisant la recherche n'a pas à sa disposition les mots $m$.

Ainsi, les procédés de chiffrement/déchiffrement connus ne permettent pas de réaliser des recherches par mot clé.

La présente invention a également pour but de pallier cet inconvénient.

Un premier but de la présente invention est donc de fournir un procédé de chiffrement qui permette à la fois de réaliser des recherches sur des mots clé et un déchiffrement des mots clé.

Ce but est atteint par la présente invention qui concerne selon un premier aspect un procédé de chiffrement/déchiffrement d'un message comprenant des étapes consistant à :

- générer une pluralité de clés comprenant des sous-étapes consistant à :

  o générer une clé publique ;
  o générer une clé de déchiffrement associée à ladite clé publique ;
  o générer une clé de dérivation associée à ladite clé publique ;

- pour une première entité, chiffrer ledit message à l'aide de ladite clé publique en un chiffré ;

- pour une seconde entité, déchiffrer ledit chiffré pour retrouver ledit message ;
- générer une trappe associée audit message, ladite trappe correspondant à une dérivée de ladite clé de dérivation spécifique audit message ;
- pour un chiffré de test, tester, à l'aide de ladite trappe associée audit message (m), si ledit chiffré de test est un chiffrement dudit message à l'aide de ladite clé publique.

Grâce au procédé ci-dessus, la clé de déchiffrement permet de réaliser le déchiffrement du message chiffré. Par ailleurs, la trappe définie grâce à la dérivée d'une clé de dérivation permet de réaliser les tests de recherche sur un chiffré de test.

Ainsi, dans l'exemple ci-dessus d'une liste de numéros de téléphone, puisque la clé de dérivation permettant de générer des trappes de recherche est différente de la clé de déchiffrement, le procédé selon l'invention permet de calculer des trappes de recherche associées à certains numéros de téléphones particuliers. De la sorte, si cette clé de dérivation est détenue par un juge, celui-ci peut émettre des trappes de recherche associées à des numéros de téléphone de personnes recherchées par la police. Ces trappes de recherche peuvent ensuite servir à détecter la présence dans le relevé chiffré de ces numéros, tout en préservant la confidentialité des numéros innocents.

Les algorithmes d'encapsulation de clé (ou KEM pour « Key Encapsulation Mechanism » en langue anglaise) sont connus en tant que tels. Ils comprennent notamment un algorithme de génération de clés, qui prend en entrée un paramètre de sécurité et qui génère une clé publique et une clé privée, un algorithme d'encapsulation de clé qui calcule une clé aléatoire et l'encapsule dans un chiffré en utilisant la clé publique et un nombre aléatoire, et un algorithme de décapsulation qui prend en entrée un chiffré c, la clé publique précédemment générée, la clé privée précédemment générée, et qui retourne la clé aléatoire encapsulée dans le chiffrée.

Les algorithmes d'encapsulation de clé basés sur une identité (ou ID-KEM pour « Identity-based Key Encapsulation Mechanism ») sont également connus en tant que tels. Ils comprennent notamment un algorithme de génération de clés qui prend en entrée un paramètre de sécurité et génère une clé publique et une clé secrète maîtresse de dérivation de clés, un algorithme de dérivation de clés qui prend en entrée les paramètres publics du système, la clé maîtresse de dérivation et une identité, et qui calcule une clé secrète associée à l'identité, un algorithme probabiliste d'encapsulation de clés qui utilise les paramètres publics du système et une identité pour générer une clé aléatoire encapsulée dans un chiffré, et un algorithme de décapsulation de clés qui prend en entrée un chiffré et la clé secrète associée à l'identité et retourne la clé aléatoire encapsulée dans le chiffré.

Ainsi, dans le procédé de chiffrement sus-mentionné, les clés générées permettant à la fois le déchiffrement et la recherche sont donc basées sur les clés générées par ces deux algorithmes.

Selon un mode de réalisation particulier, ledit procédé de chiffrement sus-mentionné comprend des étapes consistant à :

o définir un premier bloc de traitement implémentant ledit premier algorithme d'encapsulation de clé ;
o définir un second bloc de traitement implémentant ledit second algorithme d'encapsulation de clé basé sur une identité ;
o définir un troisième bloc de traitement ;
o définir un quatrième bloc de traitement ;
o fournir en entrée dudit premier bloc de traitement, un premier paramètre d'entrée ;
o générer, en sortie dudit premier bloc de traitement, une première sortie correspondant à une première clé de session symétrique, et une seconde sortie correspondant à un premier chiffré de clé de ladite première clé de session à l'aide de ladite première sous-clé;
o fournir ladite première clé de session en entrée dudit troisième bloc de traitement ;
o fournir ledit message en entrée dudit troisième bloc ;
o générer un second chiffré de message à l'aide de ladite première clé de session symétrique et dudit message ;
o fournir ladite première clé de session en entrée dudit second bloc de traitement ;
o fournir ledit message en entrée dudit second bloc de traitement ;
o générer, en sortie dudit second bloc de traitement, une première sortie correspondant à une seconde clé de session symétrique, et une seconde sortie correspondant à un troisième chiffré de clé de ladite seconde clé de session à l'aide de ladite seconde sous-clé et dudit message ;
o fournir ladite seconde clé de session en entrée dudit quatrième bloc de traitement ;
o fournir ledit premier paramètre d'entrée en entrée dudit quatrième bloc de traitement ;
o générer un quatrième chiffré de paramètre à l'aide dudit premier paramètre d'entrée et de ladite seconde clé de session ;

dans lequel ledit chiffré comprend ledit premier chiffré, ledit second chiffré, ledit troisième chiffré et ledit quatrième chiffré.

L'invention concerne également un procédé de déchiffrement lorsque le message à déchiffrer est chiffré conformément au procédé sus-mentionné. Ce procédé de déchiffrement comprend alors des étapes consistant à :

- retrouver ladite première clé de session symétrique à partir dudit premier chiffré et de ladite clé de déchiffrement ;
- déchiffrer ledit second chiffré à l'aide de ladite clé de session symétrique pour ledit troisième bloc de traitement ;
- retrouver ledit message.

Selon un autre mode de réalisation du procédé de chiffrement sus-mentionné, le procédé comprend des étapes consistant à :

o définir un cinquième bloc de traitement implémentant ledit second algorithme d'encapsulation de clé basé sur une identité ;
o définir un sixième bloc de traitement implémentant ledit premier algorithme d'encapsulation de clé;
o définir un septième bloc de traitement ;
o fournir en entrée dudit cinquième bloc de traitement, un second paramètre d'entrée ;
o fournir en entrée dudit cinquième bloc de traitement, ledit message ;
o générer, en sortie dudit cinquième bloc de traitement, une première sortie correspondant à une troisième clé de session symétrique, et une seconde sortie correspondant à un cinquième chiffré de clé de ladite troisième clé de session à l'aide de ladite seconde sous-clé et dudit message ;
o fournir ladite troisième clé de session symétrique audit sixième bloc de traitement ;
o générer, en sortie dudit sixième bloc de traitement, une première sortie correspondant à une quatrième clé de session symétrique, et une seconde sortie correspondant à un sixième chiffré de clé de ladite quatrième clé de session à l'aide de ladite première sous-clé ;
o fournir en entrée dudit septième bloc de traitement ladite quatrième clé de session :
o fournir en entrée dudit septième bloc de traitement, ledit second paramètre d'entrée ;
o fournir en entrée dudit septième bloc de traitement, ledit message ;
o générer, en sortie dudit septième bloc de traitement, un septième chiffré correspondant à un chiffré dudit message et dudit second paramètre par ladite quatrième clé de session ;

dans lequel ledit chiffré comprend ledit cinquième chiffré, ledit sixième chiffré et ledit septième chiffré.
Dans ce mode de réalisation, le déchiffrement du chiffré comprend des étapes consistant à :

- retrouver ladite quatrième clé de session symétrique à partir dudit sixième chiffré et de ladite clé de déchiffrement :
- déchiffrer ledit septième chiffré à l'aide de ladite quatrième clé de session symétrique pour ledit septième bloc de traitement ;
- retrouver ledit message.

L'invention concerne également un programme d'ordinateur comprenant un code lisible par au moins un ordinateur, ledit code provoquant l'exécution par ledit ordinateur des étapes du procédé sus-mentionné.
L'invention concerne également un cryptosystème pour le chiffrement/déchiffrement d'un message, ledit cryptosystème comprenant :

- une unité de génération de clés apte à générer des clés de chiffrement, ladite première unité comprenant :

    o une première sous-unité apte à générer une clé publique ;
    o une seconde sous-unité apte à générer une clé de déchiffrement associée à ladite clé publique ;
    o une troisième sous-unité apte à générer d'une clé de dérivation associée à ladite clé publique ;

- une unité de chiffrement apte à chiffrer ledit message à l'aide de ladite clé publique en un chiffré ;
- une unité de déchiffrement apte à déchiffrer ledit chiffré pour retrouver ledit message ;
- une unité de génération d'une trappe apte à générer une trappe associée audit message, ladite trappe correspondant à une dérivée de ladite clé de dérivation spécifique audit message ;
- une unité de test apte, pour un chiffré de test, à déterminer si ledit chiffré de test est un chiffrement dudit message à l'aide de ladite clé publique.

L'invention concerne enfin une unité de chiffrement comprenant :

- une unité de génération de clés apte à générer des clés de chiffrement, ladite première unité comprenant :

o une première sous-unité apte à générer une clé publique ;

o une seconde sous-unité apte à générer une clé de déchiffrement associée à ladite clé publique ;

o une troisième sous-unité apte à générer d'une clé de dérivation associée à ladite clé publique ;

dans lequel, ladite clé publique comprend une première sous-clé et une seconde sous-clé,

ladite première sous-clé étant une clé publique d'encapsulation d'un premier algorithme d'encapsulation de clé,

ladite clé de déchiffrement est la clé privée associée à première sous-clé,

ladite seconde sous-clé étant une clé publique basée sur une identité d'un second algorithme d'encapsulation de clé basé sur une identité,

ladite clé de dérivation étant la clé privée associée à ladite seconde sous-clé, ladite unité de chiffrement comprenant en outre,

- une première sous-unité d'encapsulation de clé apte à appliquer ledit premier algorithme d'encapsulation de clé ;
- une seconde sous-unité d'encapsulation de clé basée sur l'identité apte à appliquer ledit second algorithme d'encapsulation de clé basé sur une identité, le paramètre d'identité dudit second algorithme d'encapsulation de clé basé sur une identité étant ledit message.

L'invention sera mieux comprise à la lumière de la description détaillée ci-dessous en référence aux figures annexées dans lesquelles :

- la figure 1 représente un procédé de chiffrement selon un premier mode de réalisation de l'invention ;
- la figure 2 représente un procédé de chiffrement selon un second mode de réalisation de l'invention.

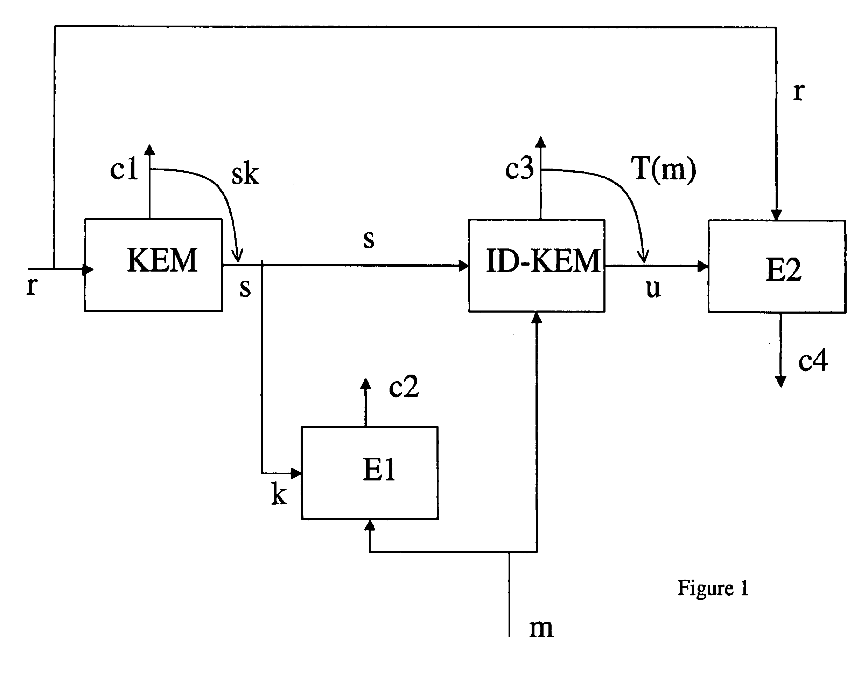

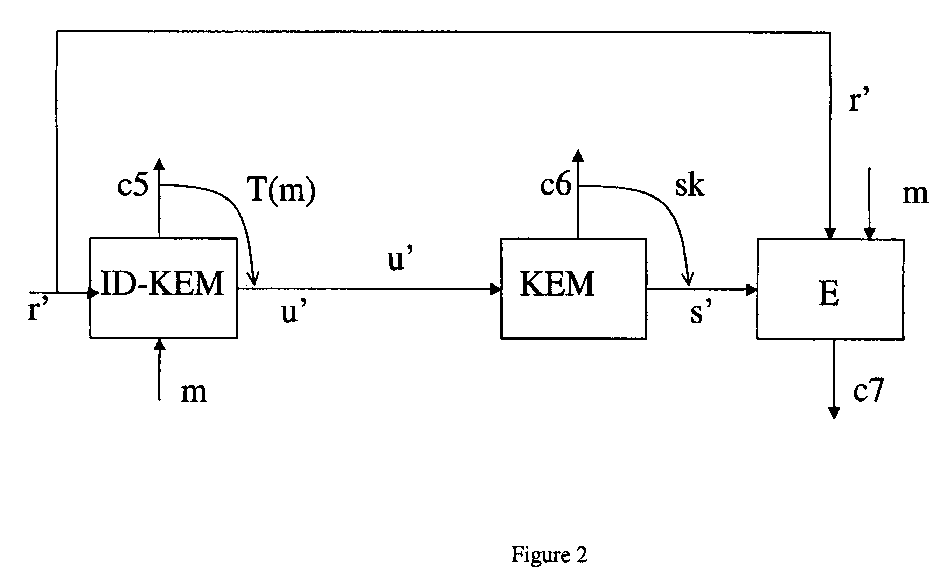

Selon les modes de réalisation illustrés FIG. 1 et 2, l'invention met en oeuvre un algorithme d'encapsulation de clés KEM et un algorithme d'encapsulation de clé basée sur une identité ID-KEM.

Ces deux types d'algorithmes sont connus en tant que tels. Nous décrivons maintenant les éléments principaux de ces algorithmes.

Un algorithme d'encapsulation de clés KEM est une primitive cryptographique mettant en relation deux entités, dans le but de générer une clé de session et de l'échanger. Il se compose des algorithmes suivants :

- $KeyGen_{KEM}(1^k)$ : un algorithme de génération de clés qui prend en entrée un paramètre de sécurité $k$ et qui génère une clé publique $pk_K$ et une clé privée $sk_K$;
- $Enc_{KEM}(pk_K, r)$ : un algorithme d'encapsulation de clé qui calcule une clé aléatoire $s$ et l'encapsule dans un chiffré $c$ en utilisant la clé publique $pk_K$ et un nombre aléatoire $r$ ;
- $KD_{KEM}(pk_K, sk_K, c)$ : un algorithme de décapsulation qui prend en entrée un chiffré $c$, la clé publique $pk_K$, la clé privée $sk_K$, et qui retourne la clé aléatoire $s$ encapsulée dans le chiffré $c$.

L'algorithme d'encapsulation de clé basé sur une identité ID-KEM se compose quant à lui des algorithmes suivants :

- $KeyGen_{ID-KEM}(1^k)$ : un algorithme de génération de clés, qui prend en entrée un paramètre de sécurité $k$ et génère une clé publique $pk_I$ et une clé secrète maîtresse de dérivation de clés $tk_I$ ;
- $KeyDer_{ID-KEM}(tk_I, pk_I, ID)$ : un algorithme de dérivation de clés qui prend en entrée la clé publique $pk_I$, la clé maîtresse de dérivation $tk_I$ et une identité $ID$, et qui calcule une clé secrète $sk_{ID}$ associée à l'identité,
- $Enc_{ID-KEM}(pk_I, ID, r)$ : un algorithme probabiliste d'encapsulation de clés qui utilise la clé publique $pk_I$, une identité $ID$, et un nombre aléatoire $r$ pour générer une clé aléatoire $u$ encapsulée dans un chiffré $c$ ;
- $KD_{ID-KEM}(sk_{ID}, c)$ : un algorithme de décapsulation de clés qui prend en entrée un chiffré $c$ et la clé secrète associée à l'identité $sk_{ID}$ et retourne la clé aléatoire $u$ encapsulée dans le chiffré sous l'identité $ID$.

Selon l'invention, on fournit un schéma de chiffrement asymétrique déchiffrable permettant la recherche d'un mot-clé m. Le schéma selon l'invention sera noté par la suite DPEKS pour « Decryptable Public-key Encryption with Keyword Search » en langue anglaise. Pour cela, on définit d'abord un algorithme de génération de clés $KeyGen_{DPEKS}(1^k)$ qui prend en entrée un paramètre de sécurité $1^k$ et génère une clé publique $pk$, une clé de déchiffrement $dk$, et une clé de dérivation de trappes $tk$.

Selon l'invention, la clé publique $pk$ est un couple composé des clés publiques $pk_K$ et $pk_I$ générées respectivement par l'algorithme de génération de clés $KeyGen_{KEM}(1^k)$ de l'algorithme d'encapsulation de clés KEM, et par l'algorithme de génération de clés $KeyGen_{ID-KEM}(1^k)$ de l'algorithme d'encapsulation de clés basée sur l'identité ID-KEM.

La clé de déchiffrement $dk$ correspond à la clé privée $sk_k$ générée par l'algorithme de génération de clés $KeyGen_{KEM}(1^k)$ de l'algorithme d'encapsulation de clés KEM.

La clé de dérivation de trappes *tk* correspond à la clé privée $tk_I$ générée par l'algorithme de génération de clés $KeyGen_{ID\text{-}KEM}(1^k)$ de l'algorithme d'encapsulation de clés basée sur une identité ID-KEM.

On définit également selon l'invention un algorithme de chiffrement $Enc_{DPKES}(pk, m, r)$ qui chiffre un mot clé *m* en un chiffré c à l'aide d'une clé publique *pk* et d'un nombre aléatoire *r*. Cet algorithme est probabiliste.

Les FIG. 1 et 2 illustrent deux exemples d'un tel algorithme de chiffrement utilisant les clés telles que précédemment générées par l'algorithme $KeyGen_{DPEKS}$.

Dans l'exemple de la FIG. 1, on fournit en entrée d'un bloc de traitement KEM tel que défini précédemment, un nombre aléatoire *r*. Le bloc KEM génère une clé de session s, encapsulée dans un chiffré *c1*. Cette clé de session *s* est obtenue à partir de *c1* par l'algorithme de décapsulation du bloc KEM à partir de la clé privée $sk_K$. On fournit ensuite cette clé de session s en entrée d'un bloc de chiffrement symétrique E1. On fournit également en entrée de E1, le message m dont on veut réaliser le chiffrement déchiffrable et cherchable. La sortie de *E1* génère un second chiffré *c2*. On fournit également en entrée d'un bloc de traitement ID-KEM la clé de session *s* en tant qu'aléa d'entrée, et le message *m* en tant qu'identité. On génère ainsi une clé *u* sous l'identité *m*, qui est encapsulée dans un troisième chiffré *c3*. Cette clé *u* est ensuite utilisée pour chiffrer le nombre aléatoire *r* dans un bloc de chiffrement symétrique E2.

Le chiffré résultat de l'algorithme de chiffrement $Enc_{DPKES}(pk, m, r)$ est alors le quadruplet (*c1, c2, c3, c4*).

Ce chiffrement est par exemple réalisé par une première entité, qui transmet le chiffré obtenu à une seconde entité pour déchiffrement et recherche.

On décrit maintenant un algorithme de déchiffrement $Dec_{DPEKS}(dk, c)$ qui déchiffre un chiffré c à l'aide d'une clé de déchiffrement *dk*.

Comme décrit plus haut, selon l'invention, la clé de déchiffrement est la clé $sk_K$ générée par l'algorithme KEM.

Ainsi, à partir du chiffré c=(*c1, c2, c3, c4*), le chiffré *c1* et la clé de déchiffrement $sk_K$ permettent de retrouver la clé de session *s* par l'algorithme de décapsulation du KEM. On déchiffre ensuite *c2* avec la clé de session *s* pour le bloc de chiffrement E1, ce qui permet d'obtenir le message voulu *m*.

On vérifie également la validité des chiffrés *c3* et *c4*. Pour ce faire, on entre les valeurs obtenues lors du déchiffrement *m* et *s*, dans l'algorithme d'encapsulation de l'ID-KEM pour l'identité correspondant au message $Enc_{ID\text{-}KEM}(pk_I, m, s)$, afin de vérifier que l'on obtient bien le chiffré *c3*. Ce chiffré *c3* permet d'obtenir une clé u à l'aide de l'algorithme de décapsulation de l'ID-KEM et de la clé privée $sk_m$ dérivée de la clé maîtresse $tk_I$ pour le message *m*. On peut alors déchiffrer l'aléa *r* à partir du bloc E2 et de la clé *u*. On contrôle ensuite la validité du chiffré *c* en fournissant l'aléa *r* en entrée du KEM et en vérifiant que l'on obtient bien *c1* et *s*.

La trappe *T(m)* fournie pour la recherche de mot clé est définie à partir de la clé de dérivation $tk_I$ et du message *m* en utilisant l'algorithme de dérivation de clés de l'ID-KEM, $T(m) = KeyDer_{ID\text{-}KEM}(tk_I, pk_I, m)= sk_m$.

L'entité chargée de la recherche du message m peut alors réaliser un test pour déterminer si le chiffré (*c1, c2, c3, c4*) fourni correspond bien à un chiffrement du message m à l'aide de la clé publique $pk=(pk_K, pk_I)$.

Selon la définition précédente des $c_i$, i=1 à 4, à partir de *c3* et de *T(m)*, on retrouve la clé *u* par l'algorithme de décapsulation de clés de l'ID-KEM, $KD_{ID\text{-}KEM}(sk_m, c3)$. La clé *u* permet alors de déchiffrer *c4* pour le bloc E2. On obtient alors l'aléa d'entrée *r*. Avec cet aléa r, on lance $Enc_{KEM}(pk_K, r)$. On obtient un chiffré *c1\**, et une clé *s\**. A l'aide de s\*, on déchiffre *c2* pour le bloc E1, et on obtient *m\**. On lance alors $Enc_{ID\text{-}KEM}(pk_I, m^*, s^*)$ pour obtenir un chiffré *c3\**.

Le test selon l'algorithme de la présente invention est alors $Test_{DPEKS}= \{c1=c1^* \ \& \ c3=c3^* \ \& \ m=m^*\}$.

Ainsi, par l'algorithme tel que décrit précédemment, il est possible à la fois de déchiffrer le chiffré reçu et de tester si le chiffré reçu correspond bien à un mot clé prédéfini résultant du chiffrement par une clé publique fixée.

On décrit maintenant des exemples d'algorithmes d'encapsulation de clés KEM et d'encapsulation de clés basés sur une identité ID-KEM utilisables dans le cadre de la présente invention.

Un exemple de KEM est l'échange de clés selon le protocole de Diffie-Hellman, utilisé dans le chiffrement ElGamal.

Dans ce cas, les paramètres publics du système sont un groupe *G* d'ordre premier *q*, un générateur *g* de ce groupe, et un élément *y*. La clé secrète *x* est alors le logarithme discret de *y* en base *g*. Pour l'encapsulation, on génère une clé à partir d'un aléa r en calculant $s=y^r$, et elle est encapsulée dans un chiffré c avec $c=g^r$.

La décapsulation d'une clé encapsulée dans un chiffré c est réalisée par $s=c^x$.

Un exemple de ID-KEM est quant à lui par exemple donné dans la construction de la fonction PEKS dans la publication de Boneh, Di Crescenzo, Ostrovski et Persiano « Public key encryption with keyword search » EUROCRYPT 2004, Volume 3027 dans « Lecture notes in Computer science », pages 506-522.

Par ailleurs, il est entendu que le schéma décrit FIG. 1 peut être complété par d'autres fonctions de hachage ou unidirectionnelle et/ou des générateurs pseudo-aléatoires selon le niveau de sécurité requis.

On décrit maintenant un second mode de réalisation d'un schéma de chiffrement déchiffrable et cherchable illustré FIG.2.

Selon ce second mode de réalisation, afin de réaliser un chiffrement cherchable et déchiffrable, on génère comme précédemment une clé publique *pk* composée des clés publiques $pk_K$ et $pk_I$ générées respectivement par l'algorithme de génération de clés $KeyGen_{KEM}(1^k)$ d'un algorithme d'encapsulation de clés KEM, et par l'algorithme de génération de clés $KeyGen_{ID-KEM}(1^k)$ d'un algorithme d'encapsulation de clés basée sur l'identité ID-KEM.

Ce mode de réalisation fait également intervenir un bloc de chiffrement symétrique E.

Le chiffrement d'un message m est réalisé de la façon suivante. On fournit en entrée de l'ID-KEM, un nombre aléatoire r', et le message m. Ceci génère une clé aléatoire u', qui est ensuite encapsulée dans un chiffré c5. Cette clé u' est ensuite utilisée comme aléa d'entrée pour l'algorithme KEM, de sorte à générer une clé s', qui est encapsulée dans un chiffré c6. Enfin, cette clé s' est fournie en entrée du bloc symétrique E pour chiffrer le couple (m,r) en un chiffré c7.

Le chiffré c retourné est alors le triplet (c5, c6, c7).

Afin de réaliser le déchiffrement à partir d'un chiffré (c5, c6, c7), la clé de déchiffrement $sk_K$ permet d'abord de retrouver la clé s'. Cette clé s' permet ensuite le déchiffrement du chiffré c7 pour le bloc E. Ceci permet de retrouver le message m ainsi que le nombre aléatoire r'. On vérifie ensuite la validité du reste du chiffré en lançant l'algorithme d'encapsulation de l'ID-KEM $Enc_{ID-KEM}(pk_I\, m, r')$ et en vérifiant que l'on obtient bien c5. L'algorithme d'encapsulation de l'ID-KEM fournit également une clé u', et on lance $Enc_{KEM}(pk_K, u')$ pour vérifier si l'on obtient bien c6 et s'.

Comme dans le mode de réalisation précédent, la trappe utilisée pour la recherche du mot clé m est définie à partir de la clé de dérivation $tk_I$ et du message m en utilisant l'algorithme de dérivation de clés de l'ID-KEM, $T(m) = KeyDer_{ID-KEM}(tk_I, pk_I, m) = sk_m$.

L'entité chargée de la recherche du message m peut alors réaliser un test pour déterminer si le chiffré (c5, c6, c7) fourni correspond bien à un chiffrement du message m à l'aide de la clé publique $pk=(pk_K, pk_I)$.

Pour ce faire, avec c5 et la trappe T(m), on retrouve une clé u'*. On lance alors $Enc_{KEM}(pk_K, u'^*)$ et on obtient un clé s* et un chiffré c6*. On déchiffre alors c7 avec la clé s* pour le bloc E, ce qui donne un couple (m*, r'*). On lance alors l'algorithme d'encapsulation de l'ID-KEM $Enc_{ID-KEM}(pk_I, m^*, r^*)$ et on obtient un chiffré c5*. Le test utilisé est alors

$$Test_{DPEKS} = \{c5=c5^* \& c6=c6^* \& m=m^*\}.$$

**Revendications**

1. Procédé de chiffrement/déchiffrement d'un message (m) comprenant des étapes consistant à :

   - générer des clés comprenant des sous-étapes de :

     • génération d'une clé publique (pk) ;
     • génération d'une clé de déchiffrement (dk) associée à ladite clé publique ;
     • génération d'une clé de dérivation (tk) associée à ladite clé publique ;

   - pour une première entité, chiffrer ledit message (m) à l'aide de ladite clé publique (pk) en un chiffré (c) ;
   - pour une seconde entité, déchiffrer ledit chiffré (c) pour retrouver ledit message (m) ;
   - générer une trappe (T(m)) associée audit message (m), ladite trappe correspondant à une dérivée de ladite clé de dérivation spécifique audit message (m) ;
   - pour un chiffré de test (c'), tester à l'aide de ladite trappe (T(m)) associée audit message (m), si ledit chiffré de test (c') est un chiffrement (c) dudit message (m) à l'aide de ladite clé publique (pk).

2. Procédé de chiffrement/déchiffrement d'un message (m), selon la revendication 1, dans lequel :

   - ladite clé publique (pk) comprend une première sous- clé ($pk_k$) et une seconde sous-clé ($pk_i$),
   - ladite première sous-clé ($pk_x$) étant une clé publique d'encapsulation générée par un premier algorithme d'encapsulation de clé (KEM), ladite clé de déchiffrement (dk) étant la clé privée ($sK_k$) associée à ladite première sous-clé ($Pk_k$),
   - ladite seconde sous-clé étant une clé publique générée par un second algorithme d'encapsulation de clé basé sur une identité (ID-KEM), ladite clé de dérivation (tk) étant la clé privée ($tk_i$) associée à ladite seconde sous-clé ($pk_i$).

3. Procédé de chiffrement/déchiffrement selon la revendication 2, dans lequel l'étape de chiffrement du message (m) en un chiffré (c) comprend les étapes suivantes : fournir en entrée d'un premier bloc de traitement, implémentant ledit premier algorithme d'encapsulation de clé (KEM), un premier paramètre d'entrée (r), ledit premier bloc générant en sortie une première clé de session symétrique (s) encapsulée dans un premier chiffré de clé (c1) à l'aide de ladite première sous-clé ($pk_k$) ;

• fournir en entrée d'un second bloc de traitement de chiffrement symétrique (E1) ladite première clé de session symétrique (s) et ledit message (m), ledit second bloc générant en sortie un second chiffré de clé (c2) ;

• fournir en entrée d'un troisième bloc de traitement, implémentant ledit second algorithme d'encapsulation de clé basé sur une identité (IDKEM), ladite première clé de session symétrique (s) et ledit message (m) en tant qu'identité, ledit troisième bloc générant en sortie une seconde clé de session symétrique (u) encapsulée dans un troisième chiffré de clé (c3) à l'aide de ladite seconde sous-clé ($pk_i$) et du message ;

• fournir en entrée d'un quatrième bloc de traitement de chiffrement symétrique (E2) ladite seconde clé de session symétrique (u) et ledit premier paramètre d'entrée (r), ledit quatrième bloc générant en sortie un quatrième chiffré (c4) ;

• le chiffré (c) résultat de l'étape de chiffrement du message (m) est le quadruplet (c1, c2, c3, c4).

4. Procédé de chiffrement/déchiffrement, selon la revendication 3, dans lequel l'étape de déchiffrement du chiffré comprend des étapes consistant à :

- retrouver ladite première clé de session symétrique (s) à partir dudit premier chiffré (c1) et de ladite clé de déchiffrement ($sK_k$) par un algorithme de décapsulation du KEM;

- déchiffrer ledit second chiffré (c2) à l'aide de ladite clé de session symétrique (s) de sorte à retrouver ledit message (m).

5. Procédé de chiffrement/déchiffrement selon la revendication 4, dans lequel l'étape de déchiffrement comprend une étape de validation des chiffrés c3 et c4 dans lequel on exécute les étapes suivantes :

• fournir en entrée au troisième bloc lesdites valeurs m et s obtenues lors du déchiffrement et vérifier que la sortie du troisième bloc correspond au troisième chiffré de clé (c3),

• retrouver une seconde clé de session symétrique (u) à partir de la troisième chiffré de clé (c3) et de ladite clé de déchiffrement ($sK_k$) du message par un algorithme de décapsulation du ID-KEM,

• retrouver le premier paramètre d'entrée r en déchiffrant le quatrième chiffré (c4) pour le quatrième bloc (E2),

• fournir le premier paramètre d'entrée r en entrée du premier bloc KEM et vérifier que l'on obtient bien le premier chiffré c1 et la première clé de session symétrique (s).

6. Procédé de chiffrement/déchiffrement selon la revendication 2, dans lequel l'étape de chiffrement du message (m) en un chiffré (c) comprend les étapes suivantes :

○ fournir en entrée d'un cinquième bloc de traitement, implémentant ledit second algorithme d'encapsulation de clé basé sur une identité (IDKEM), un second paramètre d'entrée (r') et ledit message (m) en tant qu'identité, ledit cinquième bloc générant en sortie une troisième clé de session symétrique (u') encapsulée dans un cinquième chiffré de clé (c5) à l'aide de ladite seconde sous-clé ($pk_i$) et du message ;

• fournir en entrée d'un sixième bloc de traitement, implémentant ledit premier algorithme d'encapsulation de clé (KEM), ladite troisième clé de session symétrique (u'), ledit sixième premier bloc générant en sortie une quatrième clé de session symétrique (s') encapsulée dans un sixième chiffré de clé (c6) à l'aide de ladite première sous-clé ($pk_k$) ;

○ fournir en entrée d'un septième bloc de traitement de chiffrement symétrique (E) ladite quatrième clé de session symétrique (s'), ledit message (m) et ledit second paramètre d'entrée (r'), ledit second bloc générant en sortie un septième chiffré de clé (c7) ;

• le chiffré (c) résultat de l'étape de chiffrement du message (m) est le triplet (c5, c6, c7).

7. Procédé de chiffrement/déchiffrement, selon la revendication 6, dans lequel l'étape de déchiffrement d'un message chiffré comprend des étapes consistant à :

- retrouver ladite quatrième clé de session symétrique (s') à partir dudit sixième chiffré (c6) et de ladite clé de déchiffrement ($sK_k$) par un algorithme de décapsulation du KEM;

- déchiffrer ledit septième chiffré (c7) à l'aide de ladite quatrième clé de session symétrique (s') pour ledit septième bloc de traitement de sorte à retrouver ledit message (m).

8. Programme d'ordinateur comprenant un code lisible par au moins un ordinateur, ledit code provoquant l'exécution par ledit au moins un ordinateur des étapes du procédé selon l'une des revendications précédentes.

9. Cryptosystème pour le chiffrement/déchiffrement d'un message (m), ledit cryptosystème comprenant des moyens aptes à exécuter un procédé de chiffrement/déchiffrement selon l'une des revendications précédentes.

**Claims**

1. A method for encrypting/decrypting a message (*m*) comprising steps consisting of:

   - generating keys comprising sub-steps consisting of:

      o generating a public key (*pk*);
      o generating a decryption key (*dk*) associated to said public key;
      o generating a derivation key (*tk*) associated to said public key;

   - for a first entity, encrypting said message (*m*) with the aid of said publics key (*pk*) into a cipher (*c*);
   - for a second entity, decrypting said cipher (*c*) to retrieve staid message (*m*);
   - generating a trapdoor (*T(m)*) associated to said message (*m*), said trapdoor corresponding to a derivative of said derivation key specific to said message (*m*);
   - for a test cipher (*c'*), testing, with the aid of said trapdoor (*T(m)*) associated to said message (*m*), if said test cipher (*c'*) is an encryption (*c*) of said message (*m*) with the aid of said public key (*pk*).

2. A method for encrypting/decrypting a message (*m*), according to claim 1, wherein:

   - said publics key (*pk*) comprises a first sub-key ($pk_{K,}$) and a second sub-key ($pk_I$),
   - said first sub-key ($pk_K$) being a public encapsulation key generated by a first key encapsulate algorithm (KEM), said decryption key (*dk*) being the private key ($sk_K$) associated to said first sub-key ($pk_K$),
   - said seconde sub-key being a public key generated by a second identity-based key encapsulation algorithm (ID-KEM), said derivation key (tk) being the private key ($tk_I$) associated to said second sub-key ($pk_I$).

3. A method for encrypting/decrypting a message (*m*), according to claim 2, wherein the step of encrypting the message (m) into a cipher (c) comprises the following steps:

   o providing as input of a first processing block, implementing said first key encapsulation algorithm (KEM), a first input parameter (*r*), with said first block generating as output a first symmetrical session key (*s*) encapsulated in a first key cipher (*c1*) with the aid of said first sub-key ($pk_K$);
   o providing as input of a second symmetrical encryption processing block (E1), said first symmetrical session key (*s*) and said message (m), with said second block generating as output a second key cipher (*c2*);
   o providing as input of a third processing block, implementing said second identity-based key encapsulation algorithm (IDKEM), with said first symmetrical session key (*s*) and said message (m) as the identity, with said third block generating as output a second symmetrical session key (u) encapsulated in a third key cipher (*c3*) with the aid of said second sub-key ($pk_K$) and said message;
   o providing as input of a fourth symmetrical encryption processing block (E2), said second symmetrical session key (u) and said first input parameter (r), with said fourth block generating as output a fourth key cipher (*c4*) ;
   o the cipher (c) resulting from the message (m) encryption step is the quadruplet (*c1, c2, c3, c4*).

4. A method for encrypting/decrypting a message (*m*), according to claim 3, wherein the step of decrypting the cipher comprises steps consisting of:

   - retrieving said first symmetrical session key (*s*) from said first cipher (*c1*) and from said decryption key ($sK_k$) using a decapsulation algorithm of the KEM;
   - decrypting said second cipher (*c2*) with the aid of said symmetrical session key (*s*) for retrieving said message (*m*).

5. A method for encrypting/decrypting a message (*m*), according to claim 4, wherein the step of decrypting comprises a step of validation of the ciphers c3 and c4, wherein the following steps are carried out:

o providing as input to said third block, said values m and s obtained during decryption and verifying that the output of said third block corresponds to the third key cipher (c3),

o retrieving a second symmetrical session key (u) from the third key cipher (c3) and said decryption key ($sK_k$) of the message using a ID-KEM decapsulation algorithm,

o retrieving the first input parameter r by deciphering the fourth cipher (c4) for the fourth block (E2),

o providing the first input parameter r as input of the first block KEM and verifying that the first cipher c1 and the first symmetrical session key (s) are obtained.

**6.** A method for encrypting/decrypting a message (*m*), according to claim 2, wherein the step of encrypting the message (m) into a cipher (c) comprises the following steps:

o providing as input of a fifth processing block, implementing said second identity-based key encapsulation algorithm (IDKEM); a second input parameter (r') and said message (m) as the identity, with said fifth block generating as output a third symmetrical session key (u') encapsulated in a fifth key cipher (c5) with the aid of said second sub-key ($pk_l$) and of said message;

o providing as input of a sixth processing block implementing said first key encapsulation algorithm (KEM), said third symmetrical session key (u'), with said sixth block generating as output a fourth symmetrical session key (s') encapsulated in a sixth key cipher (c6) of said first sub-key($pk_K$);

o providing as input of a seventh symmetrical enciphering processing block (E) said fourth symmetrical session key (s'), said message (m) and said second input parameter (r'), with said second block generating as output a seventh cipher (c7);

o the cipher (c) resulting from the message (m) encryption step is the triplet (c5, c6, c7).

**7.** A method for encrypting/decrypting a message (*m*), according to claim 6, wherein the step of decrypting a ciphered message comprises steps consisting of:

- retrieving said fourth symmetrical session key (s') from said sixth cipher (c6) and from said decryption key ($sK_k$) using a decapsulation algorithm of the KEM ;

- decrypting said seventh cipher (c7) with the aid of said fourth symmetrical session key (s') for said seventh processing block for retrieving said message (m).

**8.** A computer program comprising a code that can be read by at least one computer, said code producing the execution by said at least one computer of the steps of the method according to one of the preceding claims.

**9.** A cryptographic system for encrypting/decrypting a message (m), said cryptographic system comprising means suitable for executing a method for encrypting/decrypting a message according to one of the preceding claims.

**Patentansprüche**

**1.** Verfahren zur Verschlüsselung /Entschlüsselung einer Nachricht (m), umfassend die Stufen, bestehend in:

- der Generierung der Schlüssel, umfassend die Unterstufen der:

* Generierung eines öffentlichen Schlüssels (pk);
* Generierung eines dem genannten öffentlichen Schlüssel zugeordneten Entschlüsselungsschlüssels (dk);
* Generierung eines dem genannten öffentlichen Schlüssel zugeordneten Ableitungsschlüssels (tk);

- bei einer ersten Entität die genannte Nachricht (m) mithilfe des genannten öffentlichen Schlüssels (pk) in einer Chiffrierung (c) verschlüsseln;

- bei einer zweiten Entität die genannte Chiffrierung (c) entschlüsseln, um die genannte Nachricht (m) wiederzufinden;

- Generieren einer der genannten Nachricht (m) zugeordneten Falle (T(m)), wobei die genannte Falle einer Ableitung des genannten spezifischen Ableitungsschlüssels der genannten Nachricht (m) entspricht;

- bei einer Testchiffrierung (c') mithilfe der genannten, der genannten Nachricht (M) zugeordneten Falle (T(m)) testen, ob die genannte Testchiffrierung (c') eine Verschlüsselung (c) der genannten Nachricht (m) mithilfe des genannten öffentlichen Schlüssels (pk) ist.

2. Verfahren zur Verschlüsselung /Entschlüsselung einer Nachricht (m) gemäß Anspruch 1, bei dem:

- der genannte öffentliche Schlüssel (pk) einen ersten Unterschlüssel ($pk_k$) und einen zweiten Unterschlüssel ($pk_i$) umfasst,
- wobei der genannte erste Unterschlüssel ($pk_k$) ein öffentlicher Verkapselungsschlüssel ist, der von einem ersten Schlüsselverkapselungsalgorithmus (KEM) generiert wird, wobei der genannte Entschlüsselungsschlüssel (dk) der private Schlüssel ($sK_k$) ist, der dem genannten ersten Unterschlüssel ($pk_k$) zugeordnet ist,
- wobei der genannte zweite Unterschlüssel ein öffentlicher Schlüssel ist, der durch einen zweiten Verkapselungsalgorithmus generiert wird, der auf einer Identität (ID-KEM) basiert, wobei der genannte Ableitungsschlüssel (tk) der private Schlüssel ($tk_i$) ist, der dem genannten zweiten Unterschlüssel ($pk_i$) zugeordnet ist.

3. Verfahren zur Verschlüsselung /Entschlüsselung gemäß Anspruch 2, bei dem die Verschlüsselungsstufe der Nachricht (m) in einer Chiffrierung (c) die folgenden Stufen umfasst: am Eingang eines ersten Verarbeitungsblocks, der den genannten ersten Schlüsselverkapselungsalgorithmus (KEM) implementiert, einen ersten Eingangsparameter (r) liefern, wobei der genannte erste Block am Ausgang einen ersten Schlüssel einer symmetrischen Session (s) generiert, der mit Hilfe des genannten ersten Unterschlüssels ($pk_k$) in einer ersten Schlüsselchiffrierung (c1) verkapselt ist;

* am Eingang eines zweiten Verarbeitungsblocks symmetrischer Verschlüsselung (E1) den genannten ersten Schlüssel symmetrischer Session (s) und die genannte Nachricht (m) liefern, wobei der genannte zweite Block am Ausgang eine zweite Schlüsselchiffrierung (c2) generiert;
* am Eingang eines dritten Verarbeitungsblocks, der den genannten zweiten Schlüsselverkapselungsalgorithmus implementiert, der auf einer Identität (IDKEM) basiert, den genannten ersten Schlüssel symmetrischer Session (s) und die genannte Nachricht (m) als Identität liefern, wobei der genannte dritte Block am Ausgang einen zweiten Schlüssel symmetrischer Session (u) generiert, der in einer dritten Schlüsselchiffrierung (c3) mit Hilfe des genannten zweiten Unterschlüssels ($pk_i$) und der Nachricht verkapselt ist;
* am Eingang eines vierten Verarbeitungsblocks symmetrischer Chiffrierung (E2) den genannten zweiten Schlüssel symmetrischer Session (u) und den genannten ersten Eingangsparameter (r) liefern, wobei der genannte vierte Block am Ausgang eine vierte Chiffrierung (c4) generiert;
* die aus der Verschlüsselungsstufe der Nachricht (m) resultierende Chiffrierung (c) ist der Vierling (c1, c2, c3, c4).

4. Verfahren zur Verschlüsselung /Entschlüsselung gemäß Anspruch 3, bei dem die Entschlüsselungsstufe der Chiffrierung die Stufen umfasst, bestehend aus:

- dem Wiederfinden des genannten ersten Schlüssels symmetrischer Session (s) ausgehend von der genannten ersten Chiffrierung (c1) und dem genannten Entschlüsselungsschlüssel ($sK_k$) durch einen Entkapselungsalgorithmus des KEM;
- dem Entschlüsseln der genannten zweiten Chiffrierung (c2) mit Hilfe des genannten Schlüssels symmetrischer Session (s) derart, dass die genannte Nachricht (m) wiedergefunden wird.

5. Verfahren zur Verschlüsselung /Entschlüsselung gemäß Anspruch 4, bei dem die Entschlüsselungsstufe eine Validierungsstufe der Chiffrierungen c3 und c4 umfasst, in der die folgenden Stufen ausgeführt werden:

* am Eingang zum dritten Block die genannten Werte m und s liefern, die bei der Entschlüsselung erhalten wurden und überprüfen, dass der Ausgang des dritten Blocks der dritten Schlüsselchiffrierung (c3) entspricht,
* einen zweiten Schlüssel symmetrischer Session (u) ausgehend von der dritten Schlüsselchiffrierung (c3) und dem genannten Entschlüsselungsschlüssel ($sK_k$) der Nachricht durch einen Entkapselungsalgorithmus des ID-KEM wiederfinden,
* den ersten Eingangsparameter r durch Entschlüsseln der vierten Chiffrierung (c4) für den vierten Block (E2) wiederfinden,
* den ersten Eingangsparameter r am Eingang des ersten Blocks KEM liefern und überprüfen, dass effektiv die erste Chiffrierung c1 und der erste Schlüssel symmetrischer Session (s) erhalten werden.

6. Verfahren zur Verschlüsselung /Entschlüsselung gemäß Anspruch 2, bei dem die Verschlüsselungsstufe der Nachricht (m) in einer Chiffrierung (c) die folgenden Stufen umfasst:

+ am Eingang eines fünften Verarbeitungsblocks, der den genannten zweiten Schlüsselverkapselungsalgorithmus implementiert, der auf einer Identität (IDKEM) basiert, einen zweiten Eingangsparameter (r') und die genannte Nachricht (m) als Identität liefern, wobei der genannte fünfte Block am Ausgang einen dritten Schlüssel symmetrischer Session (u') generiert, der in einer fünften Schlüsselchiffrierung (c5) mit Hilfe des genannten zweiten Unterschlüssels (pki) und der Nachricht verkapselt ist;

* am Eingang eines sechsten Verarbeitungsblocks, der den genannten ersten Schlüsselverkapselungsalgorithmus (KEM) implementiert, den genannten dritten Schlüssel symmetrischer Session (u') liefern, wobei der genannte sechste erste Block am Ausgang einen vierten Schlüssel symmetrischer Session (s') generiert, der in einer sechsten Schlüsselchiffrierung (c6) mit Hilfe des genannten ersten Unterschlüssels ($pk_k$) verkapselt ist;

+ am Eingang eines siebten Verarbeitungsblocks symmetrischer Verschlüsselung (E) den genannten vierten Schlüssel symmetrischer Session (s'), die genannte Nachricht (m) und den genannten zweiten Eingangsparameter (r') liefern, wobei der genannte zweite Block am Ausgang eine siebte Schlüsselchiffrierung generiert (c7);

* die aus der Verschlüsselungsstufe der Nachricht (m) resultierende Chiffrierung (c) ist der Drilling (c5, c6, c7).

7. Verfahren zur Verschlüsselung /Entschlüsselung gemäß Anspruch 6, bei dem die Entschlüsselungsstufe einer verschlüsselten Nachricht Stufen umfasst, bestehend aus:

- dem Wiederfinden des genannten vierten Schlüssels symmetrischer Session (s') ausgehend von der genannten sechsten Chiffrierung (c6) und dem genannten Entschlüsselungsschlüssel ($sK_k$) durch einen Entkapselungsalgorithmus des KEM;
- Entschlüsseln der genannten siebten Chiffrierung (c7) mit Hilfe des genannten vierten Schlüssels symmetrischer Session (s') für den genannten siebten Verarbeitungsblock derart, dass die genannte Nachricht (m) wiedergefunden wird.

8. Computerprogramm, umfassend einen Code, der durch wenigstens einen Computer lesbar ist, wobei der genannte Code die Ausführung der Stufen des Verfahrens gemäß einem der voranstehenden Ansprüche durch den genannten wenigstens einen Computer hervorruft.

9. Verschlüsselungssystem zur Verschlüsselung /Entschlüsselung einer Nachricht (m), wobei das genannte Verschlüsselungssystem Mittel umfasst, die geeignet sind, ein Verfahren zur Verschlüsselung /Entschlüsselung gemäß einem der voranstehenden Ansprüche auszuführen.

Figure 1

Figure 2

14

**RÉFÉRENCES CITÉES DANS LA DESCRIPTION**

**Littérature non-brevet citée dans la description**

- **BONEH ; DI CRESCENZO ; OSTROVSKI ; PER-SIANO.** Public key encryption with keyword search. *Lecture notes in Computer science,* 2004, vol. 3027, 506-522